(19) Europäisches Patentamt
European Patent Office
Office européen des brevets

(11) **EP 2 447 049 B1**

(12) **EUROPÄISCHE PATENTSCHRIFT**

(45) Veröffentlichungstag und Bekanntmachung des Hinweises auf die Patenterteilung:
**01.01.2014 Patentblatt 2014/01**

(21) Anmeldenummer: **10189668.6**

(22) Anmeldetag: **02.11.2010**

(51) Int Cl.:
*B29C 70/46* *(2006.01)*          *B29C 70/34* *(2006.01)*
*B29C 43/18* *(2006.01)*

(54) **Verfahren und Einrichtung zur Herstellung von Faserverbundbauteilen**

Method and device for producing fibre composite components

Procédé et dispositif pour la fabrication des pièces en matériaux composites

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.05.2012 Patentblatt 2012/18**

(73) Patentinhaber: **C-Con GmbH**
**71069 Sindelfingen (DE)**

(72) Erfinder: **Georgii, Andreas**
**71069 Sindelfingen (DE)**

(74) Vertreter: **Dreiss**
**Patentanwälte**
**Gerokstrasse 1**
**70188 Stuttgart (DE)**

(56) Entgegenhaltungen:
**DE-A1- 10 258 630     GB-A- 2 349 599**
**GB-A- 2 465 159     US-A1- 2006 220 273**

**Beschreibung**

Die vorliegende Erfindung betrifft ein Verfahren und eine Einrichtung zur Herstellung von Faserverbundbauteilen nach dem Oberbegriff des Anspruchs 1 bzw. dem des Anspruchs 7.

Ein derartiges Verfahren und eine derartige Einrichtung sind bespielsweise aus der US-A-2006/0220273 bekannt.

Faserverbundwerkstoffe (FVW) weisen aufgrund ihres spezifischen Eigenschaftsprofils wesentliche technologische Vorteile gegenüber herkömmlichen traditionellen Konkurrenzwerkstoffen wie z. B. Stahl oder Aluminium auf. Durch ihre hohe Festigkeit und Steifigkeit bei gleichzeitig relativ geringer Dichte werden Verbundwerkstoffe bereits in einer großen Anzahl von technischen Bereichen wie der Luft- und Raumfahrt, dem Anlagenbau sowie im Sport- und Freizeitbereich verwendet. Durch gezieltes Ausnutzen der anisotropen Eigenschaften von faserverstärkten Kunststoffen können Bauteile so ausgelegt werden, dass die Masse von Strukturen oder Komponenten minimiert werden kann. Darüber hinaus kommen den Faserverbundwerkstoffen weitere Eigenschaften wie ein sehr gutes Ermüdungsverhalten sowie eine geringe thermische Ausdehnung zugute. Bei faserverstärkten Kunststoffen werden die Vorteile von mindestens zwei Materialien miteinander kombiniert. Der Werkstoffverbund besteht aus Fasern (z. B. Glas- oder Kohlefasern) als Verstärkungskomponente, die gerichtet oder ungerichtet in ein Kunststoff-Matrixsystem eingebettet sind. Die Fasern werden so vor äußeren Einflüssen geschützt und in ihrer Position gehalten. Das Matrixsystem besteht aus Polymeren mit vernetzenden entweder duroplastischen oder thermoplastischen Eigenschaften. Bei den überwiegend verwendeten duroplastischen Matrixsystemen werden hauptsächlich ungesättigte Polyesterharze (UP) und Epoxydharze (EP) eingesetzt. Im Folgenden werden die duroplastischen oder thermoplastischen Matrixwerkstoffe generell als "Harze" bezeichnet. Trotz der o. g. technologischen Vorteile und des sich daraus ergebenden Marktpotenzials konnten sich Faserverbundwerkstoffe noch nicht umfassend industriell durchsetzen. Gründe hierfür sind die nachteilige Wirtschaftlichkeit von faserverstärkten Kunststoffen mit vergleichsweise hohen Werkstoff-, Herstellungs- und Verfahrenskosten sowie einem niedrigen Automatisierungsgrad bei Hochleistungsbauteilen aus Faserverbundwerkstoffen.

Für die Herstellung von industriellen Serienbauteilen wird häufig das RTM-Verfahren verwendet. Beim RTM-Verfahren werden Faserhalbzeuge wie z.B. Gewebe oder Gelege in eine Form eingelegt, die Form wird geschlossen und anschließend wird das Fasermaterial mit flüssigem Harz getränkt. Das Harz wird dabei punktuell mit Hilfe von Druck ("Harzinjektion") aus einem sich außerhalb der Form befindenden Ansatzbehälter in die Form gedrückt. Überschüssiges Harz wird durch Bohrungen in der Form in Schläuchen abgeführt. Anschließend härtet das Harz durch eine chemische Reaktion aus. Zur Verringerung von Fehlern durch eingeschlossene Luftblasen kann der Prozess auch durch Vakuumisieren der Form unterstützt werden.

Bauteile, die im RTM-Verfahren hergestellt werden, zeichnen sich durch hohe Faservolumengehalte aus, wodurch sie bisher hauptsächlich in Hochleistungsanwendungen zum Einsatz kommen.

Für Großserien wie in der Automobilindustrie sind die bisherigen Fertigungszeiten des RTM-Verfahrens allerdings unzureichend. Zum einen aufgrund der Dauer der Harzinjektion und des notwendigen Harzflusses durch das Fasermaterial, zum anderen aufgrund der notwenigen chemischen Reaktionszeiten zum Aushärten des Harzes.

Für die Dauer der Harzinjektion kann das aus der Strömungslehre stammende Gesetz von Darcy angewendet werden. Danach lässt sich die Harzströmung mit folgender Formel berechnen:

$$Q = -k_f \cdot \frac{h_A - h_B}{L} \cdot A$$

wobei:

Q - Harzmenge; $[Q] = m^3/s$
$k_f$ - Durchlässigkeitsbeiwert; $[kf] = m/s$
$h_A$ - Standrohrspiegelhöhe an der Stelle A; $[h_A] = m$
$h_B$ - Standrohrspiegelhöhe an der Stelle B; $[h_B] = m$
L - Fließstrecke zwischen A und B; $[L] = m$
A - durchströmte Fläche; $[A] = m^2$

Hieraus ergibt sich, dass die Fließstrecke des Harzes bei konstantem Druck und gleichen Zeiteinheiten mit zunehmendem Abstand vom Angußpunkt immer kürzer wird.

Die Faserimprägnierung als zeitbestimmende Komponente im Konsolidierungsprozess muss, um kurze Taktzeiten in der Serienproduktion zu ermöglichen, so schnell wie möglich ablaufen. Aus der Formel ist erkennbar, dass dies durch die Vergrößerung des Druckgradienten erreicht werden kann.

Deshalb wird bei industrieller Verwendung des RTM-Verfahrens versucht, durch sehr hohe Drücke das Harz so schnell wie möglich durch das Fasermaterial zu pressen. Dazu werden die RTM-Formen in Hochleistungspressen eingebaut, um möglichst kurze Fertigungszeiten zu erzielen. Dieses Vorgehen hat jedoch mehrere Nachteile:

- Die verwendeten Drücke von über 6000 bar sind nur durch teure Hochleistungspressen erreichbar.
- Aufgrund der hohen Pressdrücke müssen die RTM-Formen konstruktiv auch speziell auf diese hohen Drücke ausgelegt sein.
- Die Formen müssen präzise auf die Pressen abgestimmt werden, wodurch ein schneller Werkzeugwechsel problematisch ist.
- Bei den hohen Drücken besteht die Gefahr, dass sich das Fasermaterial verschiebt.

Die Permeabilität des Fasermaterials in Gestalt des Durchlässigkeitsbeiwertes wird durch die verwendete Fasermatrix-Kombination aus Verbundfaser und Kunststoffmatrix vorgegeben und kann daher nur bedingt angepasst werden. Es bleibt also noch die Viskosität, um die Fließgeschwindigkeit zu beeinflussen. Die Viskosität ist stark temperaturabhängig und sinkt mit steigenden Temperaturen bis zu einer Grenze, die nicht unterschritten werden kann. Hohe Temperaturen bedeuten jedoch längere Aufheizzeiten der Form und erschweren die Auslegung von Presswerkzeugen. Erschwerend kommt hinzu, dass ab dem Beginn der chemischen Reaktion die Viskosität ständig ansteigt, wodurch der Harzfluss schwieriger wird.

Die aussichtsreichste Methode bleibt die Minimierung der Fließdistanzen. Dazu wurden verschiedene Verfahren wie "Compression RTM" und "Advanced RTM" entwickelt, bei denen z.B. versucht wird, die Form bis auf einen Spalt von einigen Millimetern bis Zentimetern vollständig zu schließen, um dem Harz die Möglichkeit zu geben, auf der Oberfläche des Faserhalbzeugs zu fließen und sich so zu verteilen. Anschließend wird die Form vollständig geschlossen. Das Abdichten und Reinigen der Form ist bei diesen Verfahren problematisch, so dass diese sich nicht durchgesetzt haben. Der Harzfluss bei diesen Verfahren erfolgt wie beim RTM-Verfahren von einer punktuellen Injektionsstelle ähnlich wie beim Spritzguss.

Bisher wurden bei RTM-Verfahren als Harze hauptsächlich duroplastische Harze eingesetzt. Für die Verwendung in der Automobilindustrie, wo auch Recyclinggesichtspunkte eine wichtige Rolle spielen, sind Duroplaste allerdings problematisch.

- Werden die Harze in Verbindung mit Carbonfasern eingesetzt, ergibt sich ein weiterer Nachteil, da die Herstellung von Carbonfasern einen sehr hohen Energieaufwand benötigt. Mit dem jetzigen Stand der Technik ist im Fahrzeugbau der im Vergleich zu metallischen Werkstoffen höhere Energieaufwand bei der Herstellung von Carbonfasern größer als der durch das verringerte Gewicht eingesparte Kraftstoff über die Lebensdauer eines Fahrzeugs. Die Ursache dafür liegt in der hohen Recyclingquote von metallischen Werkstoffen. Aluminium hat zum Beispiel im Fahrzeugbau eine Recyclingquote von ca. 85%.

- Es gibt kein Verfahren, mit dem sich ausgehärtete Duroplaste recyceln und wiederverwenden lassen. In Versuchsanlagen wird versucht, die Harze mittels sehr hoher Temperaturen in Drehrohröfen zu zerstören. Dieser Vorgang ist allerdings selbst sehr energieaufwändig und die dadurch gewonnen Recyclingfasern sind von sehr schlechter Qualität und lassen sich nicht zu neuen Rovings verarbeiten. Außerdem lassen sich die Harze, die ca. 1/3 des verwendeten Materials ausmachen, dabei nicht recyceln.

- Speziell im Automobilbereich haben Duroplaste das Problem, dass diese bei Schlageinwirkung wie zum Beispiel bei einem Unfall splittern, wodurch sich Verletzungsgefahren ergeben.

Der naheliegende Ausweg wäre die Verwendung von Thermoplasten. Diese haben allerdings im Vergleich zu duroplastischen Werkstoffen einige Nachteile:

- Eine bis zu 300-mal höhere Viskosität, wodurch sie mit den bisherigen Harzinjektionsverfahren in Verbindung mit Endlosfasern industriell kaum verwendet werden. Bisher werden Thermoplaste im Bereich der Faserverbundwerkstoffe hauptsächlich in Verbindung mit geschnittenen Fasern in Verfahren wie SMC, BMC etc. eingesetzt.

- Die Festigkeitswerte von Duroplasten sind aufgrund der dreidimensionalen Vernetzung im Vergleich zu Thermoplasten besser.

Die beschriebenen Nachteile bei der Verwendung von Duroplasten bei Faserverbundwerkstoffen in Großserienanwendungen sind jedoch so gravierend, dass die Verwendung von Thermoplasten in Zukunft zunehmen wird.

Die Verwendung von Thermoplasten bei Faserverbundwerkstoffen mit Endlosfasern hätte verschiedene Vorteile:

- Die Zykluszeiten könnten durch die wesentlich schnellere chemische Reaktion wesentlich gesenkt werden.

- Thermoplaste können durch einfaches Aufschmelzen wiederverendet werden.

- Beim Aufschmelzen werden die verwendeten Endlosfasern weniger beschädigt.

- Thermoplastische Harze sind üblicherweise kostengünstiger als Duroplaste.

Aus obengenannten Gründen gibt es zurzeit umfangreiche Forschungen im Bereich thermoplastisches RTM (T-RTM), und es werden erste Serienteile hergestellt, bei denen die Harzinjektion allerdings punktuell erfolgt.

Aus der US 2006/0220273 A1 ist ein Verfahren bzw. eine Einrichtung zum Herstellen von Faserverbundbauteilen durch Imprägnieren eines Faserhalbzeugs mit einer Kunststoffmatrix bekannt. Dabei wird gemäß den Figuren 2 und 3 auf den Boden der Unterform über ein erstes System die Kunststoffmatrix (ein flüssiges Harz) gebracht und danach das Faserhalbzeug (eine Matte) in die Unterform auf die Kunststoffmatrix gelegt. Gemäß Figur 4 wird danach die Form geschlossen. Das jeweils dargestellte Faserhalbzeug hat über seine gesamte Form konstante Wandstärken.

Ein vom Prinzip her gleiches Verfahren bzw. eine vom Prinzip her gleiche Einrichtung ergibt sich aus der GB 2 465 159 A. Bei dem Verfahren bzw. der Einrichtung aus der GB 2 349 599 A wird zwischen zwei identisch aufgebauten ebenen Faserhalbzeugen 22 und 24 eine Kunststoffmatrix 27 mittels eines Extruders 16 eingebracht, bevor die Form geschlossen wird.

In allen vorgenannten Fällen sind die mit konstanter Wandstärke versehenen Faserhalbzeuge entweder als ebenes Gebilde oder als kanalartiges Formteil ausgestaltet, die über alle Flächenbereiche bzw. die gesamte Fläche mit einer bestimmten und konstanten Menge an Kunststoffmatrix vor dem Schließen der Form belegt werden.

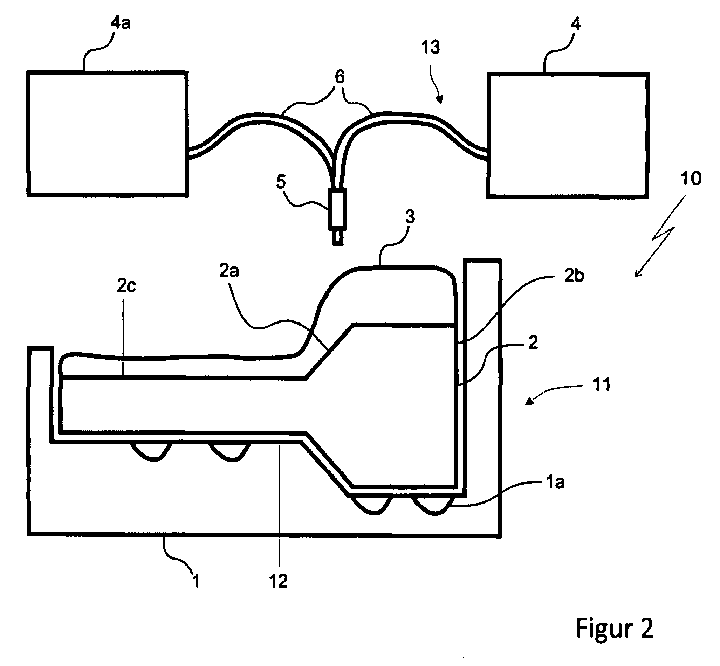

Aus der DE 102 58 630 A1 ist ein Verfahren bzw. eine Einrichtung bekannt, bei dem bzw. der flüssige Kunststoff erst dann auf das ebene Faserhalbzeug konstanter Wandstärke gebracht wird, wenn die Formhälften des Formwerkzeugs aufeinander zu bewegt und in teilgeöffnetem Zustand gehalten sind, welches Einbringen durch Einspritzen des flüssigen Kunststoffs in die hier untere Formhälfte erfolgt (Figur 2a).

Der Erfindung liegt die Aufgabe zu Grunde, ein Verfahren, und eine Einrichtung zu schaffon, mit der auch Bauteile mit lokal unterschiedlichen Wandstärken im RTM-Verfahren in hoher Qualität sowie mit geringeren Fertigungszeiten und in großer Stückzahl sowohl mittels duroplastischer Harze als auch thermoplastischer Harze fertigen lassen, wobei sich insbesondere auch neue Materialkombinationen herstellen lassen.

Zur Lösung dieser Aufgabe sind bei einem Verfahren und einer Einrichtung der eingangs genannten Art die im Anspruch 1 bzw. 7 angegebenen Merkmale vorgesehen.

Vorteilhafte Weiterbildungen der Erfindung sind Gegenstand der jeweiligen abhängigen Ansprüche.

Somit wird die Kunststoffmatrix, wie bspw. Harz nicht wie bisher in einer geschlossenen Form punktuell, sondern in einer geöffneten Form flächig in lokal dosierter, ungefähr wandstärkenabhängiger Menge so aufgebracht, dass der Harzfluss hauptsächlich transversal durch das Faserhalbzeug erfolgen kann. Dabei bedeckt das Harz die untere oder obere Fläche des Faserhalbzeugs vor dem Schließen zu einem erheblichen Teil. Dies kann dadurch erreicht werden, dass das Harz mit Hilfe eines beweglichen Sprühkopfs oder einer beweglichen Tropfeinrichtung in die Form oder auf das Faserhalbzeug so aufgebracht wird, dass das Harz vor dem Schließen der Form die betreffende Formhälfte oder das Faserhalbzeug zu einem erheblichen Teil bedeckt. Das Harz kann dabei z.B. durch Thixotropieren so eingestellt werden, dass in der Form oder auf dem Faserhalbzeug der zu benetzende Teil der Form oder das Faserhalbzeug flächig bedeckt wird, das Harz aber ohne zusätzlichen Druck nicht weiter fließt. Dadurch kann verhindert werden, dass das Harz sich in Vertiefungen der Form oder des Faserhalbzeugs sammelt, und andere Stellen trocken bleiben. Dieser Vorgang kann bauteilabhängig vor oder nach dem Einlegen des Faserhalbzeugs erfolgen.

Dieser Vorgang sollte maschinell und durch eine Steuerung bzw. Regelung kontrolliert durchgeführt werden. Dabei bietet sich zum Beispiel die Verwendung von Lackiersystemen, wie sie in der Industrie üblich sind, an. Bei einfachen Bauteilen ist auch ein manueller Auftrag des Harzes möglich.

Bei Harzen aus mehreren Komponenten ist es günstig, diese erst kurz vor dem Auftragen im Sprühkopf oder in der Tropfeinrichtung zu mischen. Dadurch beginnt die durch die chemische Harzreaktion einsetzende Erhöhung der Viskosität später. Bei größeren Bauteilen können mehrere Sprühköpfe oder Tropfeinrichtungen verwendet werden.

Dieses Verfahren bzw. diese Einrichtung kann für Faserhalbzeuge aus Endlosfasern oder aus Schnittfasern oder aus Kombinationen von beiden verwendet werden. Im Gegensatz zu den bisher verwendeten Verfahren mit Schnittfasern, bei denen die Fasern dem Harz vor dem Auftrag zugemischt werden, hat dieses Verfahren den Vorteil, dass sich die Fasern nicht während des Fließvorgangs in Richtung des Harzflusses ausrichten.

Durch dieses Verfahren ist es möglich prozesssicher Bauteile aus Faserverbundmaterial herzustellen. Durch den nur noch kurzen notwendigen Weg des Harzes zur Benetzung des Faserhalbzeugs lassen sich Teile schneller fertigen. Außerdem erhöht sich durch die kürzeren Fließstrecken und damit kürzeren Fließzeiten die Viskosität des Harzes durch die einsetzende chemische Reaktion weniger. Wie in der Formel von Darcy aufgezeigt, ist es durch die geringeren Fließstrecken möglich mit wesentlich geringeren Drücken eine gesicherte Benetzung der Fasern zu erzielen. Dadurch können schwächere und damit billigere Pressen und Formen eingesetzt werden. Durch die geringeren Drücke und die kürzeren Fließwege sind die Anforderungen an die Dichtigkeit der Form wesentlich geringer. Weiterhin verringert sich die Gefahr von Faserverschiebungen durch den Harzfluss. Durch die gezielte Aufbringung des Harzes in lokal wandstärkenabhängiger Menge ist an allen Stellen des Bauteils ein optimales Verhältnis zwischen Fasern und Harz möglich. Mit dem aufgezeigten Verfahren lassen sich auch komplizierte Bauteile mit sehr unterschiedlichen Wandstärken prozesssicher fertigen. Durch die lokale Dosierung der notwenigen Harzmenge wird weniger Harzüberschuss benötigt, womit der Harzabfall verringert werden kann. Mit diesem Verfahren können auch Harze mit höherer Viskosität, wie z.B. Thermoplaste, eingesetzt werden.

Weitere vorteilhafte Ausgestaltungen ergeben sich aus den Merkmalen eines oder mehrerer der Ansprüche 2 bis 6 und 9 bis 16.

Die nachfolgende Beschreibung bevorzugter Ausführungsformen dient im Zusammenhang mit der Zeichnung der näheren Erläuterung der Erfindung. Es zeigen:

| | |
|---|---|
| Figur 1 | in schematischer teilweise längsgeschnittener Darstellung eine Einrichtung mit einer Pressform, einem Faserhalbzeug und einem Ansatzbehälter für eine Kunststoffmatrix, wie bspw. Harz, sowie einem beweglichen, schwenkbaren Sprühkopf zur Herstellung eines Faserverbundbauteils gemäß einer ersten Ausführungsform vorliegender Erfindung, |
| Figur 2 | eine der Figur 1 entsprechende Darstellung, jedoch gemäß einer zweiten Ausführungsform vorliegender Erfindung, |
| Figuren 3 bis 5 | den Figuren 1 und 2 entsprechende Darstellung zum Aufzeigen des Harzinjektionsprozesses in mehreren Verfahrensschritten über verschiedene Bereiche des Faserverbundbauteils, |
| Figur 6 | in schematischer teilweise längsgeschnittener Darstellung eine Einrichtung gemäß einer dritten Ausführungsform vorliegender Erfindung, |
| Figur 7 | eine der Figur 5 entsprechende Darstellung, jedoch gemäß einer vierten Ausführungsform vorliegender Erfindung, |
| Figur 8 | eine der Figur 5 entsprechende Darstellung, jedoch gemäß einer fünften Ausführungsform vorliegender Erfindung, |
| Figur 9 | eine schematische Draufsicht einer Unterform der Pressform ohne Faserverbundbauteil und Kunststoffmatrix, und |
| Figuren 10 und 11 | in vergrößerter Seitenansicht eine der Harzkammern mit einem Auswerferelement in Ruhe- bzw. Arbeitsposition. |

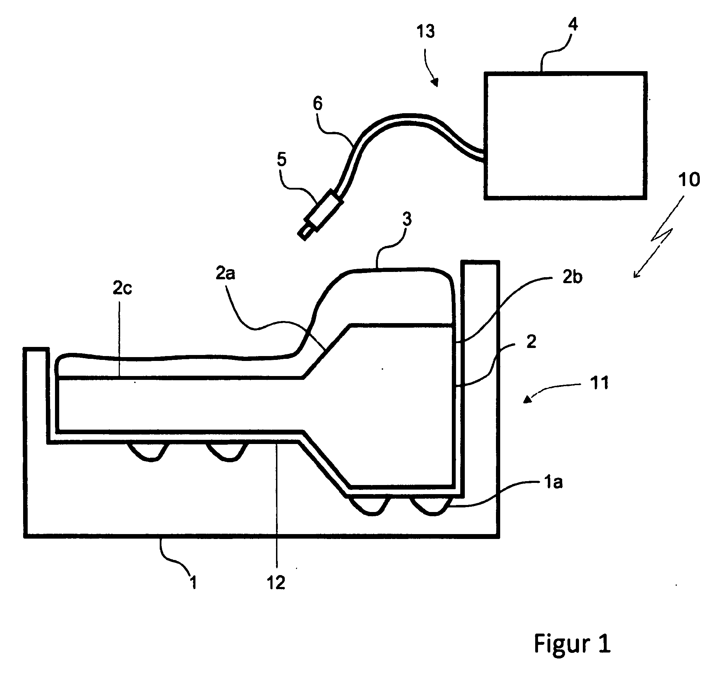

Bei der erfindungsgemäßen Einrichtung 10 zur Herstellung eines Bauteils aus einem faserverstärkten Werkstoff ist, wie in Figur 1 anhand einer ersten Ausführungsform schematisch dargestellt , eine Unterform 1 mit Harzkammern 1a im Formboden 12 vorgesehen, in welcher ein Faserhalbzeug 2 mit einer Schräge 2a positionierbar ist. Die Unterform ist Teil einer üblicherweise mehrteiligen Pressform 11. Bei dieser und weiteren Ausführungsformen ist das Faserhalbwerkzeug 2 mit einer Verdickung 2b und anschließender Schräge 2a zum dünneren Bereich 2c hin versehen.

Der Auftrag einer Kunststoffmatrix, wie bspw. eines thermoplastischen Harzes 3 erfolgt dabei in lokal dosierter Menge mittels einer Speisevorrichtung 13 aus einem Vorratsbehälter 4 über einen beweglichen Sprühkopf 5 oder einer beweglichen Tropfvorrichtung, welcher bzw. welche an einem flexiblen Schlauch 6 angebracht ist.

Bei einer zweiten Ausführungsform, wie sie in Figur 2 schematisch dargestellt ist, werden die Komponenten des Harzes 3 aus verschiedenen Vorratsbehältern 4 und 4a der Speisevorrichtung 13 zugeführt und erst im Sprühkopf 5 bzw. in der Tropfeinrichtung gemischt. Da die Viskosität des Harzes 3 mit Einsetzen der chemischen Reaktion der Komponenten über die Zeit steigt, ist es vorteilhaft, die Harzkomponenten im Prozess so spät wie möglich zu mischen.

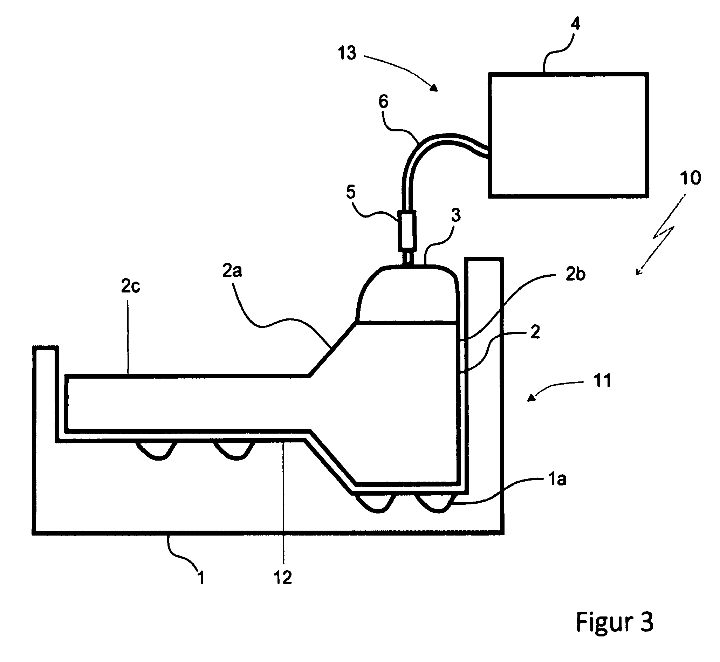

Wie in den Figuren 3 bis 5 zu sehen ist, erfolgt der Harzauftrag bereichsweise in der Art, dass die Harzmenge lokal so dosiert wird, dass diese ungefähr der an dieser Stelle zur Benetzung des Faserhalbzeugs 2 notwendigen Menge entspricht. Die notwendige Menge ergibt sich aus dem beim RTM-Verfahren optimalen Faser-Harz-Verhältnis von ca. 65/35 und einem geringen Sicherheitszuschlag an Harz, welcher im Lauf des Prozesses in die hier bodenseitigen Harzkammern 1a abgeführt wird. Die Harzmenge des lokalen Harzauftrags ist somit von der Dicke bzw. lokalen Wandstärke des jeweiligen Bereichs 2b, 2a, 2c des Faserhalbzeugs 2 abhängig.

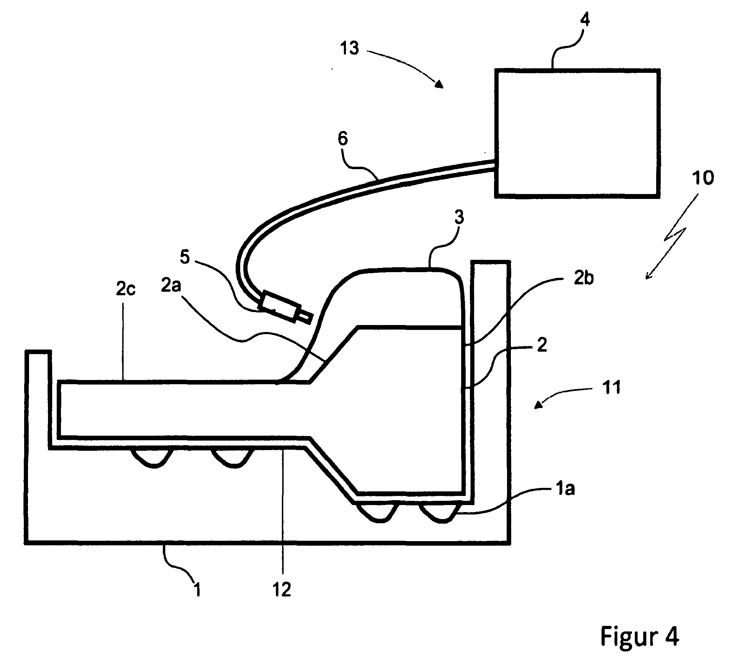

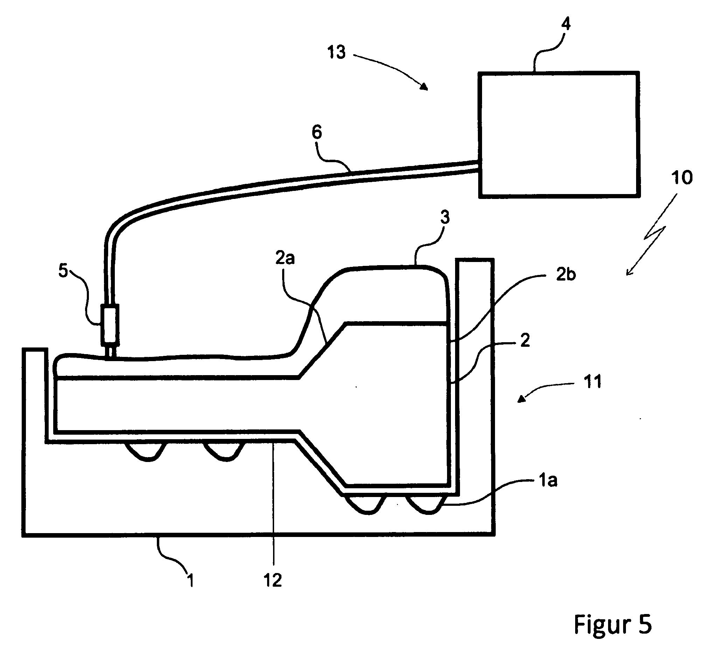

Dabei ist es vorteilhaft, die Harze zu thixotropieren, um ein Nachfließen nach dem Auftrag zu verhindern. Wie in Figur 4 zu sehen ist, werden bei herzustellenden Bauteilen mit unterschiedlichen Wandstärken thixotropierte oder höherviskose Harze in lokal unterschiedlicher, bauteilabhängiger Dicke appliziert, indem diese lokal in der gewünschten Menge aufgebracht werden. Dabei ist in Figur 5 beispielhaft zu sehen, dass die lokale Harzmenge am linken dünneren Bereich 2c des herzustellenden Bauteils reduziert ist, um dort nur die zur Benetzung des Faserhalbzeugs 2 notwendige Harzmenge zu applizieren.

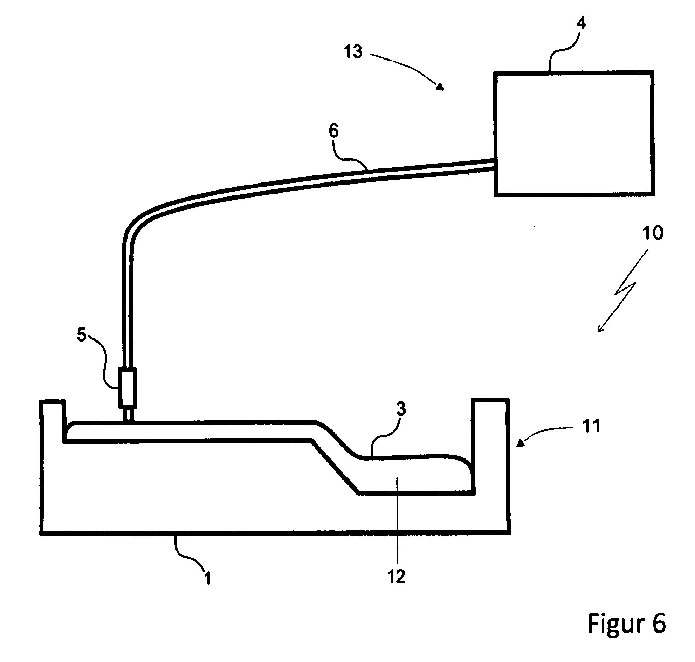

Bei einer weiteren Ausführungsform wird gemäß Figur 6 das Harz 3 vor dem Einlegen des Faserhalbzeugs 2 direkt auf den Boden 11 der Form in vorgenannter lokal dosierter Menge, also abhängig von den lokalen Wandstärken des einzulegenden Faserhalbzeugs 2, appliziert. In diesem Fall ist es günstig wenn die Harzkammern 1a nicht in der gemäß Figuren 1 bis 4 eingezeichneten unteren Formhälfte (Unterform 1) sondern in der nicht dargestellten oberen Formhälfte integriert sind.

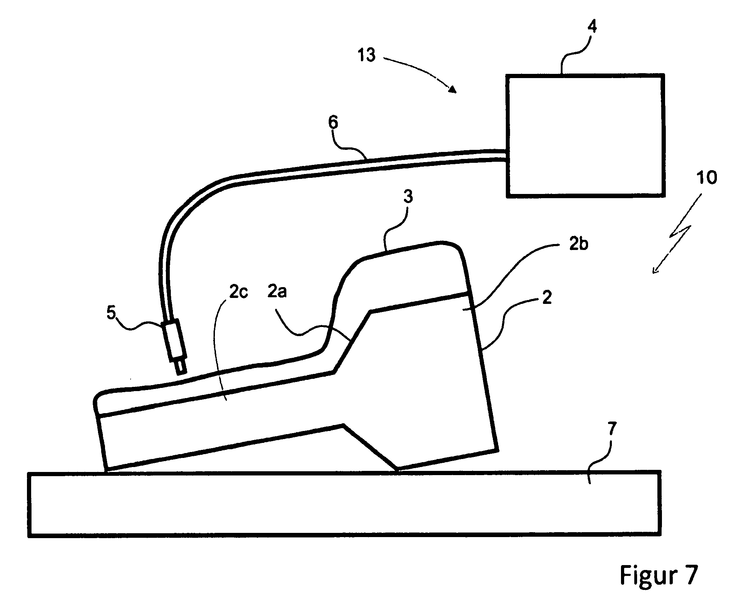

Gemäß einer alternativen Ausführungsform nach Figur 7 kann der Harzauftrag auch außerhalb der Pressform 11 bzw. Unterform 1 in lokal dosierter Menge mit Hilfe des oder der Sprühköpfe 5 oder Tropfeinrichtungen auf das Faserhalbzeug 2 erfolgen, welches auf einer Unterlage 7 liegt. Zweckmäßig ist es dabei, wenn das Faserhalbzeug 2 zuvor vorfixiert ist, um den anschließenden Transport in die Unterform 1 zu vereinfachen.

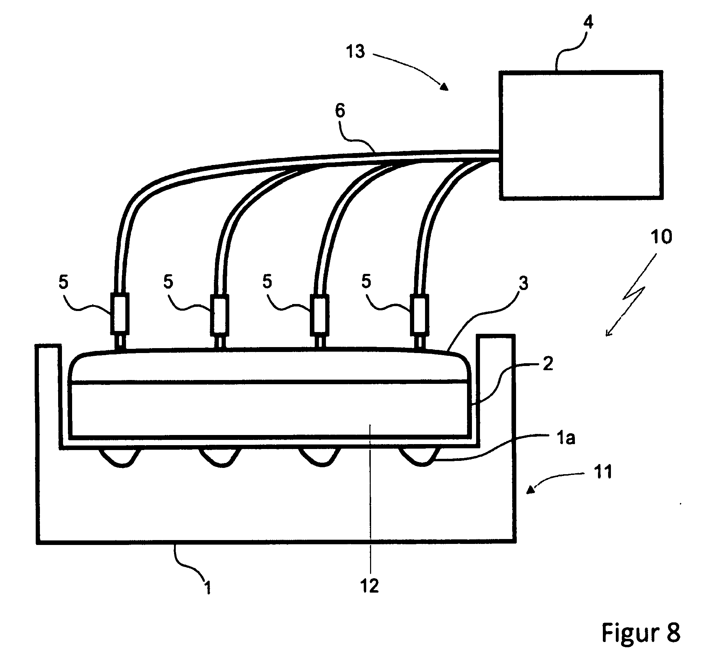

Eine weitere alternative Ausführungsform ist die Verwendung von zwei oder mehr Sprühköpfen 5 oder Tropfeinrichtungen, wie in Figur 8 gezeigt. Bei großen Bauteilen oder Bauteilen mit sehr unterschiedlichen Wandstärken kann es vorteilhaft sein, mit mehreren Sprühköpfen 5 oder Tropfeinrichtungen zu arbeiten, um die lokal unterschiedlichen Harzmengen und die durch die Sprühköpfe 5 oder Tropfeinrichtungen gelieferten Harzmengen besser aneinander anpassen bzw. aufeinander abstimmen zu können.

Das erfindungsgemäße Verfahren lässt sich kostengünstig auch in der Weise einsetzen, dass die Sprühköpfe 5 oder Tropfeinrichtungen nicht beweglich sind. Die lokal unterschiedlich dosierten Harzmengen lassen sich in diesem Fall durch verschiedene Harzmengen pro Sprühkopf 5 oder Tropfeinrichtung pro Zeiteinheit darstellen. Dabei sind die Sprühköpfe 5 bzw. Tropfeinrichtungen über die Unterform 1 bzw. das Faserhalbzeug 2 entsprechend verteilt angeordnet.

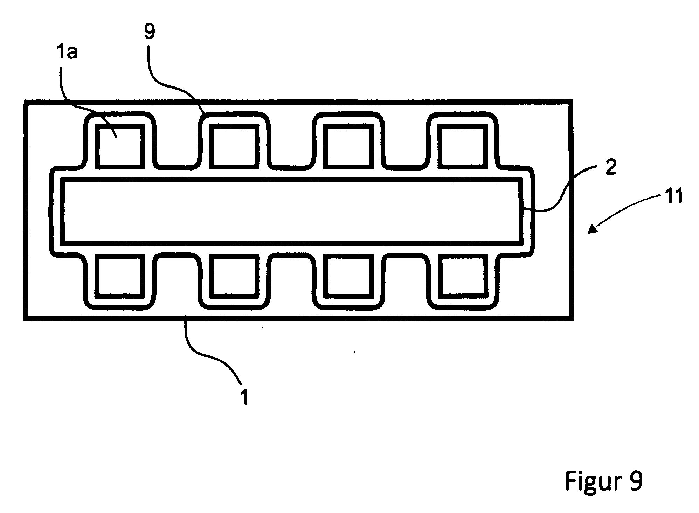

In Figur 9 ist die Unterform 1 als Draufsicht dargestellt. Die Harzkammern 1a befinden sich darin außerhalb des herzustellenden eigentlichen Bauteils. Der Harzfluss des überschüssigen Harzes 3 erfolgt dabei in der Formtrennung in der Art, dass die Unterform 1 und die Oberform durch eine Dichtung 9 in geschlossenem Zustand abgedichtet sind. Es ist vorteilhaft die Dichtung 9 so auszuführen, dass die beiden Formhälften bei geschlossener Form nicht plan aufeinanderliegen, sondern durch die Dichtung 9 ein geringer Zwischenraum entsteht. Es hat sich als günstig erwiesen, wenn dieser Zwischenraum eine Höhe von höchstens einigen 1/10 Millimetern hat. Damit ist ein Harzfluss von überschüssigem Harz in die Harzkammern 1a möglich und gleichzeitig kann beim Herausnehmen des fertigen Bauteils aus der Pressform 11 bzw. Unterform 1 diese dünne Schicht problemlos vom eigentlichen und fertigen Bauteil entfernt werden.

Bei einer vorteilhaften Variante kann die Pressform 11 bspw. über deren Unterform 1 vakuumisiert werden. Dabei ist es günstig, wenn die Luft durch die Harzkammern 1a aus der Pressform 11 gesaugt wird. Dadurch entsteht ein Unterdruck, welcher das Harz 3 durch das Faserhalbzeug 2 zu den Harzkammern 1a zieht, wodurch das Faserhalbzeug 2 schnell und verfahrenstechnisch sicher mit dem Harz 3 getränkt wird.

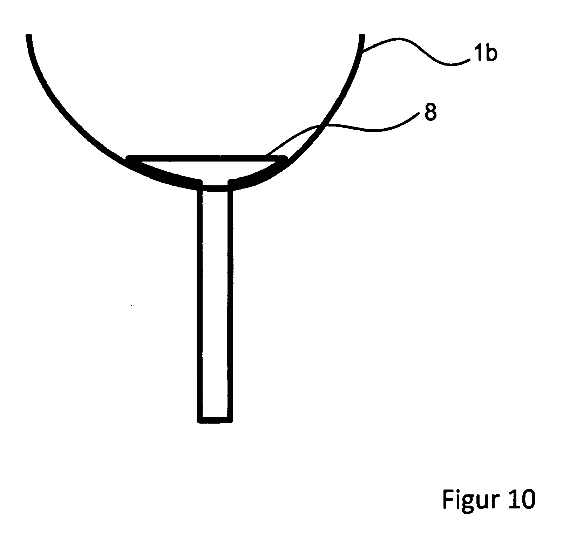

Es hat sich als günstig erwiesen, die Harzkammern 1a so auszubilden, dass das hereinfließende Harz 3 auf eine Schräge 1b trifft, wie in Figur 10 aufgezeigt. Dadurch kann vermieden werden, dass das hereinströmende Harz 3 beim Auftreffen auf den Boden der Harzkammer 1a spritzt. Damit lässt sich eine anschließende Entfernung des Restharzes aus der Harzkammer 1a vereinfachen. Weiterhin hat es sich als vorteilhaft erwiesen, wenn die Harzkammer 1a konisch ausgeprägt ist und keine Kanten oder enge Radien aufweist.

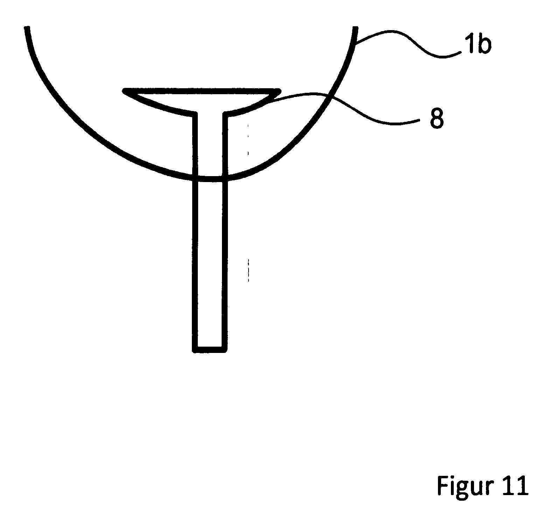

Als besonders vorteilhaft hat sich erwiesen, wenn die Harzkammern 1a mit Auswerfern 8 wie in Figur 10 und 11 gezeigt, versehen sind. Nach Beendigung des Aushärtungsprozesses und Entnahme des fertigen Bauteils kann das überschüssige Harz in den Harzkammern 1a mit Hilfe der Auswerfer 8 abgelöst werden. Durch die vorgeschlagene konische Form können die Auswerfer 8 die sich in der Harzkammer 1a befindlichen Harzreste einfach von der Wand der Harzkammer 1a ablösen, wodurch die Harzreste leicht entfernt werden können.

Das erfindungsgemäße Verfahren lässt sich kostengünstig einsetzen, wenn ein Harz 3 mit internen Trennmitteln verwendet wird. Dabei wird nicht die Pressform 11 extra mit Trennmittel beaufschlagt, sondern das Trennmittel befindet sich bereits im Harz 3 und sorgt für ein einfaches Ablösen des ausgehärteten fertigen Bauteils und der Harzreste von der Oberfläche der Pressform 11. In einer alternativen Ausführungsform wird die Pressform 11 an den Stellen, die mit Harz 3 in Berührung kommen, mit Teflon beschichtet, um ein einfaches Ablösen des Harzes 3 zu ermöglichen.

**Patentansprüche**

1. Verfahren zum Herstellen von Faserverbundbauteilen durch Imprägnieren eines Faserhalbzeugs (2) mit einer Kunststoffmatrix (3), vorzugsweise eines duro- oder thermoplastischen Harzes, die auf oder unter das Faserhalbzeug (2) gebracht wird, **dadurch gekennzeichnet, dass** die Kunststoffmatrix (3) in einer flächenbereichsweise dosierten, lokal unterschiedlichen Harz-Menge aufgebracht wird, die in Abhängigkeit der jeweiligen Wandstärke des herzustellenden Faserverbundbauteils gewählt wird.

2. Verfahren nach Anspruch 1, **dadurch gekennzeichnet, dass** das Faserhalbzeug (2) mit der auf seine Oberfläche aufgebrachten Kunststoffmatrix (3) in eine Formhälfte (1) in einer Pressform (11) eingebracht wird oder das Faserhalbzeug (2) in eine Formhälfte (1) einer Pressform (11) eingelegt und dann die Kunststoffmatrix (3) auf die Oberfläche des Faserhalbzeugs (2) gebracht wird.

3. Verfahren nach Anspruch 1, **dadurch gekennzeichnet, dass** die Kunststoffmatrix (3) in eine Formhälfte (1) einer Pressform (11) eingebracht und dann das Faserhalbzeug (2) auf die Kunststoffmatrix (3) in der Formhälfte (1) gelegt wird.

4. Verfahren nach mindestens einem der vorhergehenden Ansprüche, **dadurch gekennzeichnet, dass** vor dem Schließen der Pressform (11) die Oberfläche des Faserhalbzeugs (2) oder die Bodenfläche (12) der einen Formhälfte (1) mit der Kunststoffmatrix (3) bedeckt wird.

5. Verfahren nach mindestens einem der vorhergehenden Ansprüche, **dadurch gekennzeichnet, dass** mit dem Schließen der Pressform (11) die Kunststoffmatrix (3) transversal durch das Faserhalbzeug (2) fließt.

6. Verfahren nach mindestens einem der vorhergehenden Ansprüche, **dadurch gekennzeichnet, dass** die Viskosität der Kunststoffmatrix (3) so eingestellt wird, dass die Kunststoffmatrix (3) in der einen Formhälfte (1) bzw. auf der Oberfläche des Faserhalbzeugs (2) nicht wegfließt.

7. Einrichtung (10) zum Herstellen von Faserverbundbauteilen durch Imprägnieren eines Faserhalbzeugs (2) mit einer Kunststoffmatrix (3), vorzugsweise eines duro- oder thermoplastischen Harzes, mit einer aus zwei Formhälften (1) bestehenden Pressform (11), wobei das Faserhalbzeug (2) in die eine Formhälfte (1) einlegbar ist und die Kunststoffmatrix (3) aus einer Speisevorrichtung (13) zuführbar ist, die auf die Oberfläche des Faserhalbzeugs (2) oder auf eine Bodenfläche (12) der einen Formhälfte der Pressform (11) gerichtet ist, **dadurch gekennzeichnet, dass** die Speisevorrichtung (13) zum Aufbringen der Kunststoffmatrix (3) in einer flächenbereichsweise dosierten, lokal unterschiedlichen Harz-Menge auf oder unter das Faserhalbzeug (2) in Abhängigkeit der jeweiligen Wandstärke des herzustellen Faserverbundbauteils dosierbar ist.

8. Einrichtung nach Anspruch 7, **dadurch gekennzeichnet, dass** die Pressform (11) derart ausgebildet ist, dass mit ihrem Schließen bei der eingelegten Schichtung aus Kunststoffmatrix (3) und Faserhalbzeug (2) die Kunststoffmatrix (3) transversal durch das Faserhalbzeug (2) fließt.

9. Einrichtung nach Anspruch 7, **dadurch gekennzeichnet, dass** die Speisevorrichtung (13) mindestens einen Sprühkopf (5) bzw, eine Tropfvorrichtung aufweist, der bzw. die vorzugsweise zum Faserhalbzeug (2) oder zur einen Formhälfte (1) relativ beweglich angeordnet ist.

10. Einrichtung nach Anspruch 9, **dadurch gekennzeichnet, dass** die Kunststoffmatrix (3) aus mindestens einem Vorratsbehälter (4) zuführbar ist.

11. Einrichtung nach Anspruch 9 oder 10, **dadurch gekennzeichnet, dass** die Kunststoffmatrix (3) aus zwei oder mehr Komponenten besteht, die im Sprühkopf (5) bzw. in den Sprühköpfen (5) vermischt sind.

12. Einrichtung nach mindestens einem der Ansprüche 9 bis 11, **dadurch gekennzeichnet, dass** mindestens eine der Formhälften (1) bodenseitig und vorzugsweise zu beiden Seiten des Faserhalbzeugs (2) mit Kammern (1a) zur Aufnahme überschüssiger Kunststoffmatrix (3) versehen ist.

13. Einrichtung nach Anspruch 12, **dadurch gekennzeichnet, dass** die Kunststoffmatrix-Kammern (1a) eine oder mehrere schräge Wände (2a) und/oder dass die Kunststoffmatrix-Kammern (1a) eine oder mehrere Öffnungen aufweisen, durch die ein Unterdruck auf die Pressform (11) bringbar ist.

14. Einrichtung nach mindestens einem der Ansprüche 12 bis 13, **dadurch gekennzeichnet, dass** die Kunststoffmatrix-Kammern (1a) mit Auswerfern (8) versehen sind.

15. Einrichtung nach mindestens einem der Ansprüche 12 bis 14, **dadurch gekennzeichnet, dass** die Kunststoffmatrix-Kammern (1a) teflonbeschichtet sind.

## Claims

1. Method of producing fibre composite components by impregnating a semi-finished fibre product (2) with a plastics matrix (3), preferably a thermoset resin or thermoplastic resin, which is placed onto or below the semi-finished fibre product (2), **characterised in that** the plastics matrix (3) is applied as a quantity of resin which is metered by surface regions and which differs locally and which is selected as a function of the wall-thickness, in the region concerned, of the fibre composite component to be produced.

2. Method according to claim 1, **characterised in that** the semi-finished fibre product (2) is introduced into a half (1) of a mould (11) together with the plastics matrix (3) which has been applied to its surface, or the semi-finished fibre product (2) is laid in a half (1) of a mould (11) and the plastics matrix (3) is then applied to the surface of the semi-finished fibre product (2).

3. Method according to claim 1, **characterised in that** the plastics matrix (3) is introduced into a half (1) of a mould (11) and the semi-finished fibre product (2) is then laid onto the plastics matrix (3) in the mould half (1).

4. Method according to at least one of the preceding claims, **characterised in that**, before the mould (11) is closed, the surface of the semi-finished fibre product (2) or the surface (12) of the floor of the one mould half (1) is covered with the plastics matrix (3).

5. Method according to at least one of the preceding claims, **characterised in that**, on the closing of the mould (11), the plastics matrix (3) flows transversely through the semi-finished fibre product (2).

6. Method according to at least one of the preceding claims, **characterised in that** the viscosity of the plastics matrix (3) is set in such a way that the plastics matrix (3) does not flow away in the one mould half (1) or on the surface of the semi-finished fibre product (2), as the case may be.

7. Apparatus (10) for producing fibre composite components by impregnating a semi-finished fibre product (2) with a plastics matrix (3), preferably a thermoset resin or thermoplastic resin, having a mould (11) comprising two mould halves (1), the semi-finished fibre product (2) being able to be laid in one mould half (1) and the plastics matrix (3) being able to be fed in from a feeding device (13) which is directed towards the surface of the semi-finished fibre product (2) or towards the surface of the floor (12) of the one half of the mould (11), **characterised in that** the feeding device (13) can be metered, as a function of the wall-thickness in the region concerned of the fibre composite component to be produced, to apply the plastics matrix (3) onto or below the semi-finished product (2) as a quantity of resin which is metered by surface regions and which differs locally.

8. Apparatus according to claim 7, **characterised in that** the mould (11) is so designed that, on its closing with the layered structure comprising the plastics matrix (3) and the semi-finished product (2) inserted, the plastics matrix (3) flows transversely through the semi-finished fibre product (2).

9. Apparatus according to claim 7, **characterised in that** the feeding device (13) has at least one spray head (5) or dropper device which is preferably arranged to be movable relative to the semi-finished fibre product (2) or to the one mould half (1).

10. Apparatus according to claim 9, **characterised in that** the plastics matrix (3) can be fed in from at least one supply container (4).

11. Apparatus according to claim 9 or 10, **characterised in that** the plastics matrix (3) comprises two or more components which are mixed in the spray head (5) or heads (5).

12. Apparatus according to at least one of claims 9 to 11, **characterised in that** at least one of the mould halves (1) is provided, in its floor and preferably at both sides of the semi-finished fibre product (2), with chambers (1a) to receive excess plastics matrix (3).

13. Apparatus according to claim 12, **characterised in that** the plastics-matrix chambers (1a) have one or more oblique walls (2a) and/or **in that** the plastics-matrix chambers (1a) have one or more openings through which a vacuum can be applied to the mould (11).

14. Apparatus according to at least one of claims 12 and 13, **characterised in that** the plastics-matrix chambers (1a) are provided with ejectors (8).

15. Apparatus according to at least one of claims 12 to 14, **characterised in that** the plastics-matrix chambers (1a) are Teflon-coated.

**Revendications**

1. Procédé pour la fabrication de pièces en matériaux renforcés par des fibres par l'imprégnation d'un demi-produit renforcé par des fibres (2) avec une matrice en matière plastique (3), de préférence une résine thermodurcissable ou thermoplastique, qui est appliquée sur ou sous ledit demi-produit renforcé par des fibres (2), **caractérisé en ce que** la matrice en matière plastique (3) est appliquée en une quantité de résine localement différente, dosée selon les zones de la surface, la quantité étant choisie en fonction de l'épaisseur de paroi de chaque pièce à fabriquer en matériau renforcé par des fibres.

2. Procédé selon la revendication 1, **caractérisé en ce que** le demi-produit renforcé par des fibres (2) avec la matrice en matière plastique (3) appliquée sur sa surface est introduit dans une moitié de moule (1) d'un moule de compression (11) ou le demi-produit renforcé par des fibres (2) est posé dans une moitié de moule (1) d'un moule de compression (11) et, ensuite, la matrice en matière plastique (3) est posée sur la surface du demi-produit renforcé par des fibres (2).

3. Procédé selon la revendication 1, **caractérisé en ce que** la matrice en matière plastique (3) est introduite dans une moitié de moule (1) d'un moule de compression (11) et, ensuite, le demi-produit renforcé par des fibres (2) est posé sur la matrice en matière plastique (3) dans la moitié de moule (1).

4. Procédé selon au moins l'une quelconque des revendications précédentes, **caractérisé en ce que**, avant la fermeture du moule de compression (11), la surface du demi-produit renforcé par des fibres (2) ou le fond (12) de l'une des moitiés de moule (1) est recouvert avec la matrice en matière plastique (3).

5. Procédé selon au moins l'une quelconque des revendications précédentes, **caractérisé en ce que**, conjointement avec la fermeture du moule de compression (11), la matrice en matière plastique (3) s'écoule transversalement à travers le demi-produit renforcé par des fibres (2).

6. Procédé selon au moins l'une quelconque des revendications précédentes, **caractérisé en ce que** la viscosité de la matrice en matière plastique (3) est définie de telle sorte que ladite matrice en matière plastique (3) dans l'une des moitiés de moule (1) ou sur la surface du demi-produit renforcé par des fibres (2) ne puisse pas s'échapper.

7. Dispositif (10) pour la fabrication de pièces en matériaux renforcés par des fibres par l'imprégnation d'un demi-produit renforcé par des fibres (2) avec une matrice en matière plastique (3), de préférence une résine thermodurcissable ou thermoplastique, comportant un moule de compression (11) constitué de deux moitiés de moule (1), le demi-produit renforcé par des fibres (2) pouvant être introduit dans l'une des moitiés de moule (1) et la matrice en matière plastique (3) pouvant être acheminée à partir d'un dispositif d'alimentation (13) qui est dirigé vers la surface du demi-produit renforcé par des fibres (2) ou vers un fond (12) de l'une des moitiés de moule du moule de compression (11), **caractérisé en ce que** ledit dispositif d'alimentation (13) peut être dosé pour appliquer la matrice en matière plastique (3) en une quantité localement différente, dosée selon les zones de la surface, sur ou sous le demi-produit renforcé par des fibres (2) en fonction de l'épaisseur de paroi de chaque pièce à fabriquer en matériau renforcé par des fibres.

8. Dispositif selon la revendication 7, **caractérisé en ce que** le moule de compression (11) est configuré de telle sorte que, conjointement avec la fermeture de celui-ci une fois que l'empilage formé de la matrice en matière plastique (3) et du demi-produit renforcé par des fibres (2) est introduit, la matrice en matière plastique (3) s'écoule transversalement à travers le demi-produit renforcé par des fibres (2).

9. Dispositif selon la revendication 7, **caractérisé en ce que** le dispositif d'alimentation (13) comporte au moins une tête de pulvérisation (5) ou un dispositif de goutte à goutte qui est disposé(e) de manière mobile de préférence par rapport au demi-produit renforcé par des fibres (2) ou par rapport à une moitié de moule (1).

10. Dispositif selon la revendication 9, **caractérisé en ce que** la matrice en matière plastique (3) peut être acheminée à partir d'au moins un récipient de stockage (4).

11. Dispositif selon la revendication 9 ou 10, **caractérisé en ce que** la matrice en matière plastique (3) est constituée de deux composants ou plus, qui sont mélangés dans la tête de pulvérisation (5) ou dans les têtes de pulvérisation (5).

12. Dispositif selon l'une quelconque des revendications 9 à 11, **caractérisé en ce qu'**au moins une des moitiés de moule (1) est munie, sur le fond et de préférence sur les deux côtés du demi-produit renforcé par des fibres (2), de chambres (1a) destinées à recevoir la matrice en matière plastique (3) excédentaire.

13. Dispositif selon la revendication 12, **caractérisé en ce que** les chambres à matrice en matière plastique (1a) comportent une ou plusieurs parois (2a) inclinées et/ou en ce que les chambres à matrice en matière plastique (1a) comportent une ou plusieurs ouvertures à travers lesquelles une dépression peut être appliquée sur le moule de compression (11).

14. Dispositif selon au moins l'une quelconque des revendications 12 à 13, **caractérisé en ce que** les chambres à matrice en matière plastique (1a) sont munies d'éjecteurs (8).

15. Dispositif selon au moins l'une quelconque des revendications 12 à 14, **caractérisé en ce que** les chambres à matrice en matière plastique (1a) sont revêtues de téflon.

Figur 1

Figur 2

EP 2 447 049 B1

Figur 3

EP 2 447 049 B1

Figur 4

Figur 5

EP 2 447 049 B1

Figur 6

Figur 7

Figur 8

EP 2 447 049 B1

Figur 9

EP 2 447 049 B1

1b

8

Figur 10

Figur 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060220273 A
- US 20060220273 A1
- GB 2465159 A
- GB 2349599 A
- DE 10258630 A1